# EUROPÄISCHE PATENTSCHRIFT

(11) **EP 2 752 724 B1**
(45) Veröffentlichungstag und Bekanntmachung des Hinweises auf die Patenterteilung: **01.06.2016**
(21) Anmeldenummer: 13150544.8
(22) Anmeldetag: 08.01.2013
(51) Int. Cl.: G05B 23/02

(54) **Verfahren zur Kontrolle von Feldgeräten, Steuergerät, Programmelement und computerlesbares Medium**
Method for monitoring of field devices, controller, program element and computer-readable medium
Procédé de contrôle d'appareils de terrain, appareil de commande, élément de programmation et support lisible sur ordinateur

(43) Veröffentlichungstag der Anmeldung: 09.07.2014
(73) Patentinhaber: VEGA Grieshaber KG, 77709 Wolfach (DE)
(72) Erfinder: Faist, Fridolin, 77709 Oberwolfach (DE); Wettlin, Martin, 77761 Schiltach (DE)
(74) Vertreter: Maiwald Patentanwalts GmbH

(56) Entgegenhaltungen:
- WO-A1-2009/034000
- DE-A1-102010 028 152
- DE-A1-102010 063 430
- GB-A- 2 341 458
- US-A1- 2007 038 700
- "Betriebsanleitung VEGAPULS 67", , 27. September 2012 (2012-09-27), Seiten 1-84, XP55062886, Gefunden im Internet: URL:http://www.vega-technique.fr/downloads /BA/36533-DE.PDF [gefunden am 2013-05-14]

## Beschreibung

### TECHNISCHES GEBIET

Die Erfindung betrifft ein Verfahren, ein Steuergerät sowie ein Programmelement zur Kontrolle und Steuerung von Feldgeräten im Bereich der industriellen Messwerterfassung. Weiter betrifft die Erfindung ein computerlesbares Medium, auf dem ein Programmelement zur Kontrolle und Steuerung von Feldgeräten im Bereich der industriellen Messwerterfassung gespeichert ist.

### TECHNISCHER HINTERGRUND

In der Druck- und Füllstandmessung werden heute mit Mikroprozessoren ausgestattete Feldgeräte eingesetzt, welche neben der eigentlichen Messaufgabe auch Diagnoseinformationen und Messwerte sammeln und zwischenspeichern können. Die zwischengespeicherten Daten können anschließend ausgelesen und als Dateien gespeichert werden. Später können die aufgezeichneten Dateien zur Analyse mit einer Analysesoftware eingelesen und teils grafisch visualisiert werden. Jedoch beschränken sich die bekannten Systeme auf die Verwaltung von Messwertkurven und erfordern ein hohes Maß an Konfigurationsaufwand.

Die US 2007/0038700 A1 beschreibt ein Interfacemodul für die Feldmontage. Das intelligente Interfacemodul beinhaltet zumindest einen Datenverbindungsport, der zur Koppelung an ein Datenkommunikationsnetzwerk konfiguriert ist, sowie zumindest einen Prozesskommunikationsport, der zur Koppelung an einen Feldgerätebus konfiguriert ist.

Die WO 2009/034000 A1 beschreibt ein Verfahren zum Darstellen von Prozessinformation in einem industriellen Kontrollsystem, welches das Generieren von zumindest einer Trendkurve für eine oder mehrere Variablen eines Prozesses in einem gegebenen Zeitintervall aufweist.

Die GB 2 341 458 A beschreibt eine einheitliche Anzeige von Trenddaten und Prozessereignissen.

Die DE 10 2010 028 152 A1 beschreibt ein Feldgerät zum Anschluss an einen Feldbus, wobei das Feldgerät dazu ausgelegt ist, über den Feldbus Daten mit einem Hostrechner auszutauschen.

Die Betriebsanleitung "Radarsensor zur kontinuierlichen Füllstandmessung von Schüttgütern", VEGAPLUS 67, Profibus PA, Document ID: 36533, Seiten 53-54, beschreibt einen Messwert- und Ereignisspeicher.

### ZUSAMMENFASSUNG DER ERFINDUNG

Es ist eine Aufgabe der Erfindung, die Kontrolle und Steuerung von Feldgeräten zu erleichtern.

Die Aufgabe wird gelöst durch ein Verfahren, ein Steuergerät, ein Programmelement sowie ein computerlesbares Medium gemäß den unabhängigen Ansprüchen.

Weiterbildungen und Ausführungsformen sind den Unteransprüchen und der nachfolgenden Beschreibung zu entnehmen.

Es ist ein Verfahren zur Kontrolle und Steuerung von Feldgeräten im Bereich der industriellen Messwerterfassung offenbart. Ein erster Schritt des Verfahrens ist das Einlesen von Feldgerätedaten, welche mehrere Untergruppen von Feldgerätedaten aufweisen. Diese Untergruppen von Feldgerätedaten können verschiedenen Datentypen angehören sowie an verschiedenen Zeitpunkten erzeugt worden sein. Weiterhin kann eine einzelne Untergruppe von Feldgerätedaten an mehreren Zeitpunkten erzeugt worden sein. Beispielsweise kann eine einzelne Untergruppe während eines Zeitraums erzeugt worden sein. Ein zweiter Schritt des Verfahrens ist das Feststellen der Zeitpunkte, an denen die jeweiligen Untergruppen der eingelesenen Feldgerätedaten erzeugt wurden. Jede Untergruppe der eingelesenen Feldgerätedaten werden in einem dritten Schritt zu einem entsprechenden Feldgerät zugeordnet. In einem vierten Schritt werden eine erste Gruppe der Untergruppen der eingelesenen Feldgerätedaten zu einem ersten Datentyp und eine zweite Gruppe der Untergruppen der eingelesenen Feldgerätedaten zu einem zweiten Datentyp zugeordnet. Schließlich werden in einem fünften Schritt die Untergruppen der eingelesenen Feldgerätedaten in einem Diagramm in Abhängigkeit der Zeitpunkte, an denen sie erzeugt wurden, und in Abhängigkeit ihres Datentyps grafisch dargestellt. Die Schritte dieses Verfahrens können beliebig wiederholt werden. Ferner kann das Einlesen der Feldgerätedaten auch in mehreren Schritten stattfinden.

Ein solches Verfahren bietet eine übersichtliche Darstellung einer großen Menge an verschiedenen Feldgerätedaten eines oder mehrerer Feldgeräte. Dies bedeutet für einen Wartungsfachmann eine Zeitersparnis, da viele verschiedene Feldgerätedaten gleichzeitig dargestellt werden. Somit kann der Wartungsfachmann viele verschiedene Feldgerätedaten gleichzeitig kontrollieren, wodurch er in einem gegebenen Zeitraum viele Feldgerätedaten und/oder viele Feldgeräte kontrollieren kann. Weiter können mit einem solchen Verfahren auch Korrelationen zwischen verschiedenen Gruppen von Untergruppen von Feldgerätedaten leichter kontrolliert werden. So kann beispielsweise kontrolliert werden, ob die Berechnung einer abgeleiteten Größe von einer gemessenen Größe durchgeführt wird, oder ob Lücken in der Berechnung der abgeleiteten Größe vorhanden sind.

Gemäß einer Ausführungsform der Erfindung weist das Verfahren zusätzlich den Schritt der Auswahl einer Untergruppe der eingelesenen Feldgerätedaten in der grafischen Darstellung sowie das grafische Darstellen der Feldgerätedaten der ausgewählten Untergruppe der eingelesenen Feldgerätedaten auf.

Mit anderen Worten kann in der übersichtlichen Darstellung der Untergruppen der eingelesenen Feldgerätedaten gezielt eine Untergruppe der eingelesenen Feldgerätedaten ausgewählt werden, wodurch die entsprechenden Daten der ausgewählten Untergruppe dargestellt werden. Somit wird ein Wechseln von der übersichtlichen Darstellung der Untergruppen zu einer Darstellung der in der ausgewählten Untergruppe befindlichen Daten ermöglicht.

Gemäß der erfindungsgemäßen Verfahrens weist das Diagramm ein Koordinatensystem mit einer ersten Achse und einer zweiten Achse auf. Die Untergruppen der eingelesenen Feldgerätedaten werden im Diagramm mit einem Symbol dargestellt, wobei das Symbol an einer ersten Koordinate entlang der ersten Achse und an einer zweiten Koordinate entlang der zweiten Achse positioniert wird. Die erste Koordinate entspricht den Zeitpunkten, an denen die jeweilige Untergruppe der eingelesenen Feldgerätedaten erzeugt wurde und die zweite Koordinate entspricht dem Datentyp, welchem die Untergruppe der eingelesenen Feldgerätedaten zugeordnet wurde.

Durch die Darstellung in einem Koordinatensystem ist es für einen Wartungsfachmann möglich, jeder Untergruppe den jeweilige Zeitpunkt der Datenerzeugung sowie dessen Datentyp zuzuordnen. Dadurch wird eine übersichtliche Darstellung vieler Feldgerätedaten verschiedener Datentypen, die an verschiedenen Zeitpunkten aufgezeichnet wurden, ermöglicht.

gemäß der beanspruchten Verfahrens werden über einen Zeitraum ermittelte Untergruppen der eingelesenen Feldgerätedaten mit einem Balken dargestellt. Der Balken erstreckt sich entlang der ersten Achse von einer dritten Koordinate bis zu einer vierten Koordinate, wobei die dritte Koordinate dem Beginn der Erzeugung der Untergruppe der eingelesenen Feldgerätedaten und die vierte Koordinate dem Ende der Erzeugung der Untergruppe der eingelesenen Feldgerätedaten entspricht. Entlang der zweiten Achse ist der Balken an einer fünften Koordinate positioniert, wobei die fünfte Koordinate dem Datentyp der Untergruppe der eingelesenen Feldgerätedaten entspricht.

Dadurch sind die Zeiträume, in denen die jeweiligen Untergruppen der eingelesenen Feldgerätedaten erzeugt wurden, ersichtlich. Somit können Lücken in einer Aufzeichnung, die über einen Zeitraum stattgefunden hat, erkannt werden.

In einer weiteren Ausführungsform der Erfindung wird ein Messwert durch ein Symbol im Koordinatensystem dargestellt, wobei das Symbol entlang der ersten Achse an einer sechsten Koordinate und entlang der zweiten Achse an einer siebten Koordinate positioniert ist. Die sechste Koordinate entspricht dem Zeitpunkt, an dem der Messwert erfasst wurde und die siebte Koordinate entspricht der Größe des Messwerts.

Somit werden in einer grafischen Darstellung Untergruppen von eingelesenen Feldgerätedaten sowie Messwerte in Abhängigkeit der Zeitpunkte der Datenerzeugung gleichzeitig dargestellt. Einem Wartungsfachmann wird dadurch die Funktionalität bereitgestellt, gleichzeitig die Erzeugung verschiedener Untergruppen von Feldgerätedaten zu kontrollieren und die Größe eines oder mehrerer Messwerte zu kontrollieren.

Gemäß einer weiteren Ausführungsform der Erfindung sind die erste Gruppe von Untergruppen der eingelesenen Feldgerätedaten sowie die zweite Gruppe von Untergruppen der eingelesenen Feldgerätedaten einem Datentyp aus der Gruppe bestehend aus Echokurven, DTM-Messwerten, Messwerten, vom Feldgerät detektierten Ereignissen, DTM-Dateien und Dokumenten zugeordnet. Hierbei steht die Abkürzung "DTM" für "Device Type Manager". Der Datentyp der Echokurve zeigt beispielsweise Reflexionen eines Radarsignals in Abhängigkeit der Tiefe eines Behälters. Dabei handelt es sich um Echokurven, die durch eine dauerhafte Verbindung mit einem Steuersystem aufgezeichnet und als Datei gespeichert wurden. Bei den DTM-Messwerten handelt es sich um Messwertkurven, die durch eine dauerhafte Verbindung mit einem Steuersystem aufgezeichnet und als Datei gespeichert wurden. Bei den Messwerten handelt es sich um Messwertkurven, die vom Feldgerät automatisch aufgezeichnet wurden und später von einem Steuersystem ausgelesen und als Datei gespeichert wurden. Bei den vom Feldgerät detektierten Ereignissen handelt es sich beispielsweise um Statusmeldungen oder um Parametermanipulationen, die vom Feldgerät automatisch aufgezeichnet wurden und später mit einer Kontrollsoftware ausgelesen und als Datei gespeichert wurden. DTM-Dateien beinhalten ein Abbild der kompletten Geräteparametrierungen, die beispielsweise mit einem VEGA-DTM durchgeführt wurden. Bei den Dokumenten handelt es sich um beliebige Dateien als Anhang (Bilder, Zeichnungen, Berichte, usw.), die einem ausgewählten Feldgerät zugeordnet wurden.

Gemäß einer weiteren Ausführungsform der Erfindung werden im Diagramm Untergruppen der eingelesenen Feldgerätedaten von einem Feldgerät dargestellt.

In einer weiteren Ausführungsform der Erfindung wird ein erstes Diagramm mit Untergruppen der eingelesenen Feldgerätedaten eines ersten Feldgeräts und ein zweites Diagramm mit Untergruppen der eingelesenen Feldgerätedaten eines zweiten Feldgeräts gleichzeitig grafisch dargestellt. Weiter können auch drei oder mehr Diagramme mit Untergruppen der eingelesenen Feldgerätedaten von drei oder mehr Feldgeräten gleichzeitig grafisch dargestellt werden.

Dadurch wird einem Wartungsfachmann die Funktionalität bereitgestellt, verschiedene Feldgeräte gleichzeitig zu kontrollieren. Für den Wartungsfachmann wird dadurch beispielsweise ersichtlich, ob eines von mehreren Feldgeräten, die alle eine gleichartige Messung durchführen, ein von den anderen Feldgeräten abweichendes Verhalten aufzeigt.

In einer weiteren Ausführungsform des Verfahrens werden die Feldgerätedaten in Form von Dateien eingelesen und zu jeder Datei wird ein Datensatz in einer Datenbank angelegt.

In einer weiteren Ausführungsform des Verfahrens werden zum Darstellen der Feldgerätedaten die zugehörige Datei ausgelesen und die in der Datei gespeicherten Daten grafisch dargestellt.

Gemäß einer Ausführungsform der Erfindung werden die Feldgerätedaten über eine Geräteschnittstelle beispielsweise mittels einer Email oder SMS eingelesen.

Die Erfindung betrifft auch ein Steuergerät zur Kontrolle und Steuerung von Feldgeräten im Bereich der industriellen Messwerterfassung, das ausgeführt ist, ein oben und im Folgenden beschriebenes Verfahren durchzuführen.

Weiter betrifft die Erfindung ein Programmelement zur Kontrolle und Steuerung von Feldgeräten im Bereich der industriellen Messwerterfassung, das, wenn es auf einem Prozessor eines Steuergeräts ausgeführt wird, das Steuergerät anleitet, ein oben und im Folgenden beschriebenes Verfahren durchzuführen.

Schließlich betrifft die Erfindung ein computerlesbares Medium, auf dem ein Programmelement zur Kontrolle und Steuerung von Feldgeräten im Bereich der industriellen Messwerterfassung gespeichert ist, das, wenn es auf einem Prozessor eines Steuergeräts ausgeführt wird, das Steuergerät anleitet, ein oben und im Folgenden beschriebenes Verfahren durchzuführen.

### KURZE BESCHREIBUNG DER FIGUREN

Fig. 1 zeigt ein Diagramm gemäß einem Ausführungsbeispiel der Erfindung, in dem verschiedene Gruppen von Feldgerätedaten dargestellt sind.
Fig. 2 zeigt drei Diagramme gemäß einem Ausführungsbeispiel der Erfindung, in dem verschiedene Untergruppen von Feldgerätedaten dargestellt sind.
Fig.3 zeigt ein Diagramm gemäß einem Ausführungsbeispiel der Erfindung, in dem eine Untergruppe von Feldgerätedaten sowie Messwerte dargestellt sind.
Fig. 4 zeigt ein Diagramm mit einer Echokurve gemäß einem Ausführungsbeispiel der Erfindung.
Fig. 5 zeigt ein Steuergerät zur Kontrolle und Steuerung von Feldgeräten im Bereich der industriellen Messwerterfassung sowie vier Feldgeräte und ein computerlesbares Medium gemäß einem Ausführungsbeispiel der Erfindung.
Fig. 6 zeigt ein Flussdiagramm eines Verfahrens zur Kontrolle und Steuerung von Feldgeräten im Bereich der industriellen Messwerterfassung gemäß einem Ausführungsbeispiel der Erfindung.

Weitere Merkmale, Vorteile und Anwendungsmöglichkeiten der Erfindung ergeben sich aus der nachfolgenden Beschreibung der Ausführungsbeispiele und den Figuren. Dabei bilden alle beschriebenen und/oder bildlich dargestellten Merkmale für sich und in beliebiger Kombination den Gegenstand der Erfindung auch unabhängig von ihrer Zusammensetzung in den einzelnen Ansprüchen oder Rückbezügen. Sind in der nachfolgenden Beschreibung in verschiedenen Figuren die gleichen Bezugszeichen angegeben, so bezeichnen diese gleiche oder ähnliche Elemente. Gleiche oder ähnliche Elemente können aber auch durch unterschiedliche Bezugszeichen bezeichnet sein.

### DETAILLIERTE BESCHREIBUNG VON AUSFÜHRUNGSBEISPIELEN

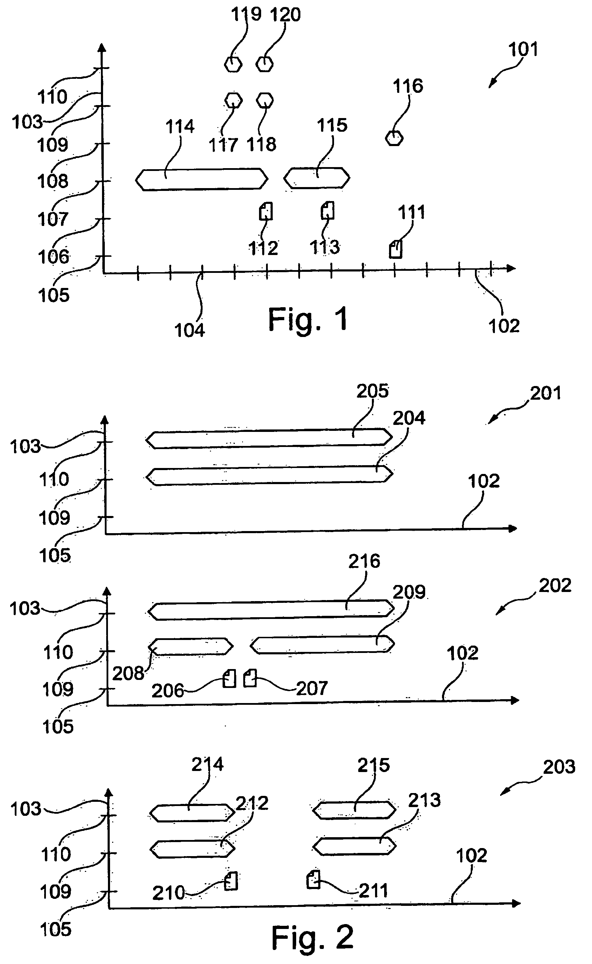

In Fig. 1 ist ein Diagramm mit einem Koordinatensystem 101 abgebildet. Das Koordinatensystem 101 weist eine erste horizontale Achse 102 sowie eine zweite vertikale Achse 103 auf. Entlang der ersten Achse 102 entsprechen die Koordinaten den Zeitpunkten 104, an denen die jeweilige Untergruppe der eingelesenen Feldgerätedaten erzeugt wurde. Entlang der zweiten Achse 103 entsprechen die Koordinaten dem Datentyp, welchem die Untergruppe der eingelesenen Feldgerätedaten zugeordnet wurde. Beispielsweise entspricht die erste Koordinate 105 dem Datentyp der Dokumente, die zweite Koordinate 106 dem Datentyp der DTM-Dateien, die dritte Koordinate 107 dem Datentyp der vom Feldgerät detektierten Ereignissen, die vierte Koordinate 108 dem Datentyp der Messwerte, die fünfte Koordinate 109 dem Datentyp der DTM-Messwerte und die sechste Koordinate 110 dem Datentyp der Echokurven. Im Diagramm sind Untergruppen von Feldgerätedaten, die dem Datentyp der DTM-Dateien und Dokumenten zugeordnet worden sind, mit einem Symbol 111, 112 und 113 dargestellt. Weiter ist im Diagramm dargestellt, dass in zwei verschiedenen Zeiträumen vom Feldgerät Untergruppen von Feldgerätedaten mit dem Datentyp Ereignisse aufgezeichnet wurden. Dies ist durch zwei Balken 114 und 115 dargestellt. Über einen Zeitraum, der zeitlich später angeordnet ist, wurden Untergruppen von Feldgerätedaten mit dem Datentyp Messwerte vom Feldgerät aufgezeichnet. Dies ist durch den Balken 116 dargestellt. Mit den Balken 117 sowie 118 ist die Aufzeichnung von Untergruppen von Feldgerätedaten mit dem Datentyp DTM-Messwerten in zwei verschiedenen Zeiträumen dargestellt. In den gleichen zwei Zeiträumen wurden ebenfalls Untergruppen von Feldgerätedaten mit dem Datentyp Echokurven aufgezeichnet. Dies ist durch die Balken 119 und 120 grafisch dargestellt.

Typischerweise werden Aufzeichnungen dieser Art entweder allgemein zu Protokollierungszwecken verwendet, oder aber auch zur Optimierung von Messsystemen bzw. bei Problemanlagen zur Fehleranalyse.

Das Diagramm 101 ist beispielsweise Teil eines grafischen Kalenderwerkeugs einer Kontrollsoftware zum einfachen Zugriff auf die Historie-Daten eines Feldgeräts. Zur besseren Orientierung können innerhalb des Koordinatensystems Hilfslinien und unterschiedlich gefärbte Flächen enthalten sein. Auf der zweiten Achse 103 werden beispielsweise nur genau die Datentypen angezeigt, zu denen Feldgerätedaten gespeichert sind. So wird bereits mit einem Blick erkennbar ob beispielsweise Untergruppen von Feldgerätedaten mit dem Datentyp Echokurven zum gewählten Feldgerät gespeichert wurden. Zu jedem der dargestellten grafischen Symbole ist ein Link hinterlegt. Beispielsweise wird per Mausklick auf eines der Symbole automatisch auf die zum gewählten Datentyp passende Ansicht gewechselt und es wird automatisch der Zeitabschnitt voreingestellt, der zu dem gewählten Symbol passt.

In Fig. 2 sind ein erstes Diagramm 201, ein zweites Diagramm 202 sowie ein drittes Diagramm 203 dargestellt. Jedes Diagramm weist ein Koordinatensystem mit einer ersten Achse 102 und einer zweiten Achse 103 auf. Die Koordinate der ersten Achse 102 entspricht den Zeitpunkten, an denen die jeweilige Untergruppe von Feldgerätedaten erzeugt wurde. Die Koordinate entlang der zweiten Achse 103 entspricht dem Datentyp, dem die Gruppe der jeweiligen Untergruppen zugeordnet wurde. In diesem Ausführungsbeispiel sind entlang der zweiten Achse 103 die Datentypen der Dokumente 105, der DTM-Messwerte 109 sowie der Echokurven 110 dargestellt. Im ersten Diagramm 201 ist durch den Balken 205 dargestellt, dass über einen gewissen Zeitraum Untergruppen von Feldgerätedaten mit dem Datentyp Echokurven aufgezeichnet wurden. Durch einen zweiten Balken 204 wird dargestellt, dass über den gleichen Zeitraum eine Untergruppe von Feldgerätedaten mit dem Datentyp der DTM-Messwerte aufgezeichnet wurde. Beispielsweise kann diese Untergruppe eine von der Echokurve abgeleitete Füllstandshöhe sein. Im Diagramm 201 ist somit ersichtlich, dass wenn eine Echokurve aufgezeichnet wurde, auch eine Füllstandshöhe abgeleitet und aufgezeichnet wurde.

Im Diagramm 202 ist ersichtlich, dass über den gleichen Zeitraum ein zweites Feldgerät eine Untergruppe von Feldgerätedaten mit dem Datentyp der Echokurve aufgezeichnet hat. Dies ist durch den Balken 216 grafisch dargestellt. An den Balken 208 und 209 ist hingegen ersichtlich, dass nicht im gesamten Zeitraum, in dem eine Echokurve aufgezeichnet wurde, auch eine entsprechende Untergruppe von Feldgerätedaten mit dem Datentyp Messwert, beispielsweise eine Füllstandshöhe, abgeleitet und/oder aufgezeichnet wurde. Dies kann beispielsweise im Falle einer abgeleiteten Füllstandshöhe daraufhindeuten, dass die Messung und/oder Aufzeichnung der Echokurve im Zeitraum dieser Lücke fehlerhaft war. Dies wird beispielsweise in einer Datei, die durch das Symbol 206 dargestellt ist, protokolliert. Für den Wartungsfachmann ist aus dieser grafischen Darstellung ersichtlich, dass das zweite Feldgerät in einem gewissen Zeitraum keinen Messwert aufgezeichnet hat. Nach dem Beheben dieses Fehlers protokolliert der Wartungsfachmann dies beispielsweise in einem weiteren Dokument, das mit dem Symbol 207 grafisch dargestellt ist.

In einem dritten Diagramm ist für ein drittes Feldgerät grafisch dargestellt, dass in einem ersten und in einem zweiten Zeitraum Untergruppen von Feldgerätedaten mit dem Datentyp Echokurve aufgezeichnet wurden. In einem gewissen Zeitraum wurden also keine Untergruppen von Feldgerätedaten mit dem Datentyp Echokurve aufgezeichnet. Dies ist durch die Balken 214 und 215 grafisch dargestellt. An den Balken 212 sowie 213 ist ersichtlich, dass wenn Untergruppen von Feldgerätedaten mit dem Datentyp Echokurve aufgezeichnet wurde, auch eine Untergruppe von Feldgerätedaten mit dem Datentyp Messwert aufgezeichnet wurde, beispielsweise eine abgeleitete Füllstandshöhe. Für den Wartungsfachmann deutet dies beispielsweise daraufhin, dass zu einem gewissen Zeitraum die Echokurvenaufzeichnung des Feldgeräts fehlerhaft war, aber die Ableitung der Füllstandshöhe im Zeitraum der Echokurvenaufzeichnung funktioniert hat. In einem Dokument, das mit dem Symbol 210 grafisch dargestellt wird, protokolliert das Feldgerät beispielsweise den Ausfall der Echokurvenaufzeichnung. In einem weiteren Dokument, das mit dem Symbol 211 dargestellt ist, protokolliert der Wartungsfachmann beispielsweise, dass dieser Fehler behoben wurde.

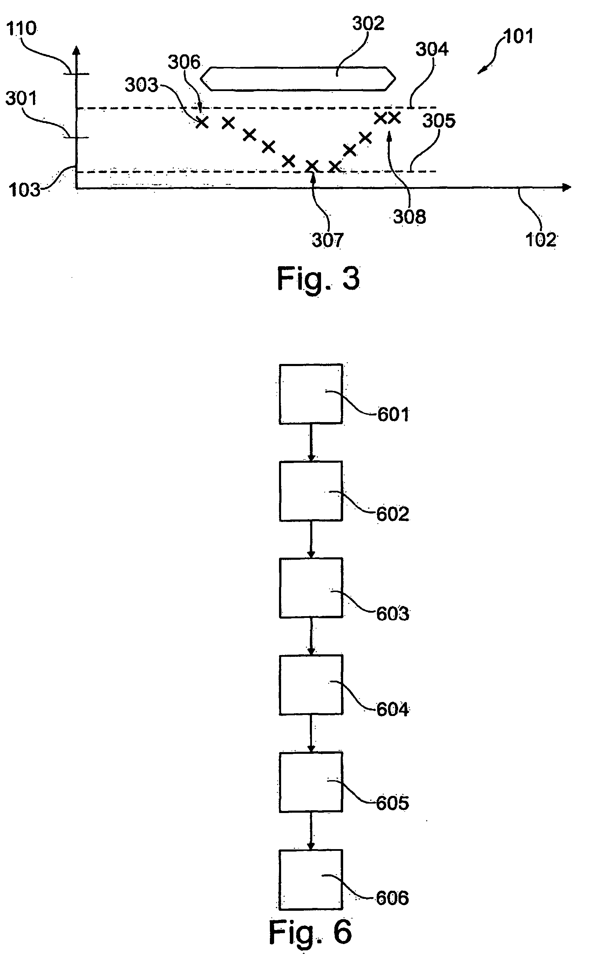

In Fig. 3 ist ein weiteres Diagramm mit einem Koordinatensystem 101 abgebildet. Das Koordinatensystem 101 weist eine erste horizontale Achse 102 sowie eine zweite vertikale Achse 103 auf. Entlang der ersten Achse 102 entsprechen die Koordinaten den Zeitpunkten 104, an denen die jeweilige Untergruppe der eingelesenen Feldgerätedaten erzeugt wurde. Entlang der zweiten Achse 103 entsprechen die Koordinaten dem Datentyp, welchem die Untergruppe der eingelesenen Feldgerätedaten zugeordnet wurde. In diesem Ausführungsbeispiel entspricht die Koordinate 110 dem Datentyp der Echokurven und die Koordinate 301 der Größe eines Messwerts. Beispielsweise entspricht der Messwert einer von der Echokurve abgeleiteten Füllstandshöhe. Die gestrichelten Linie 304 stellt den oberen Maximalwert des Messwertes, beispielsweise der Füllstandshöhe, dar und die gestrichelten Linie 305 stellt den unteren Minimalwert des Messwertes, beispielsweise der Füllstandshöhe, dar. Somit wird im Diagramm gleichzeitig der Zeitraum, in dem Echokurven aufgezeichnet wurden, sowie die Größe eines Messwerts, beispielsweise einer Füllstandshöhe, mit einem Symbol 302 dargestellt. In diesem Ausführungsbeispiel ist ersichtlich, dass die Füllstandshöhe sich zu Beginn der Aufzeichnung nahe am oberen Maximalwert befand (siehe Bezugszeichen 303). Zu einem späteren Zeitpunkt befand sich die Füllstandshöhe nahe am unteren Minimalwert (siehe Bezugszeichen 307) und am Ende der Aufzeichnung befand sich die Füllstandshöhe wieder nahe am oberen Maximalwert (siehe Bezugszeichen 308).

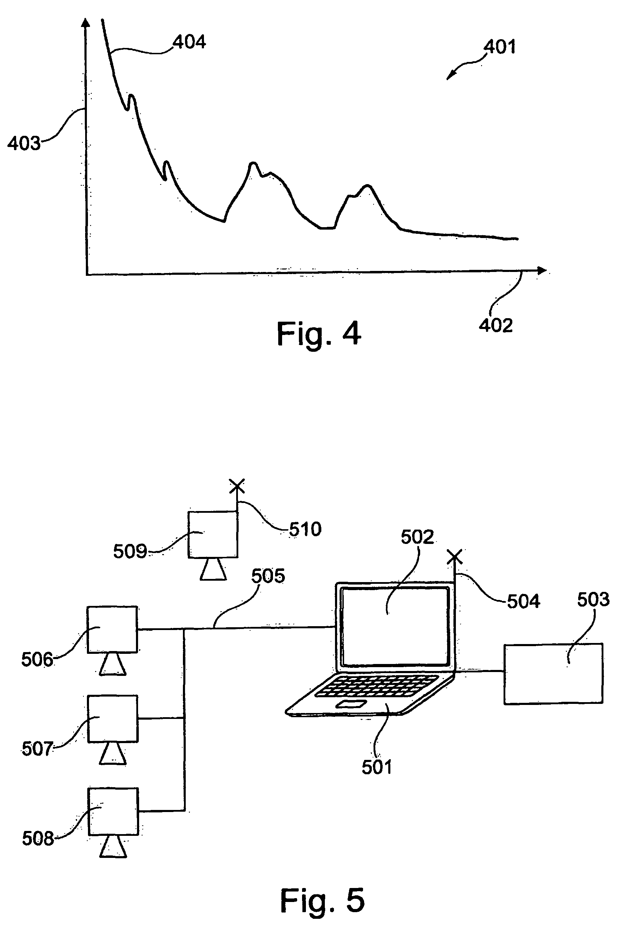

In Fig. 4 ist ein Diagramm 401 dargestellt, welches beispielsweise grafisch dargestellt wird, wenn eine Untergruppe der eingelesenen Feldgerätedaten in der grafischen Darstellung ausgewählt wird. In diesem Ausführungsbeispiel wird eine Untergruppe, die der Gruppe der Echokurven zugeordnet wurde, ausgewählt. Die Echokurve wird beispielsweise in einem Koordinatensystem mit einer ersten Achse 402 und einer zweiten Achse 403 dargestellt. Die Koordinate entlang der ersten Achse 402 entspricht einer Distanz in Meter. Die Koordinate entlang der zweiten Achse 403 entspricht einer Signalstärke in Dezibel. Die Echokurve 404 stellt die Stärke des Reflexionssignals in Abhängigkeit der Distanz dar.

In Fig. 5 ist ein Steuergerät zur Kontrolle und Steuerung von Feldgeräten und zum Verwalten und Visualisieren von Feldgerätedaten im Bereich der industriellen Messwerterfassung abgebildet. Das Steuergerät beinhaltet ein Gerät zum grafischen Darstellen 502, beispielsweise einen Bildschirm, ein computerlesbares Medium 503, beispielsweise ein CD-Laufwerk, sowie eine Antenne 504. Auf dem computerlesbaren Medium ist beispielsweise ein Programmelement zur Kontrolle und Steuerung von Feldgeräten gespeichert. Weiter ist das Steuergerät über eine Leitung 505 mit drei Feldgeräten 506, 507, 508 verbunden. Ein viertes Feldgerät 509 mit einer Antenne 510 ist über eine Funkverbindung mit dem Steuergerät verbunden.

Diese Feldgeräte 506, 507, 508, 509 sind mit Mikroprozessoren ausgestattet die neben der eigentlichen Messaufgabe auch Diagnoseinformationen und Messwerte sammeln und Zwischenspeichern können. Als Diagnoseinformationen können beispielsweise Echokurven, Fehlerzustände und Parametermanipulationen mit Zeitstempel zwischengespeichert werden. Als Messwertkurven können ermittelte Messwerte, Elektroniktemperatur oder Messsicherheit aufgezeichnet werden. Die zwischengespeicherten Daten können später, wenn der Anwender mit einer Kontrollsoftware mit dem Feldgerät verbunden ist, ausgelesen und als Dateien gespeichert werden.

Neben der Möglichkeit, diese Aufzeichnungen durch das Feldgerät 506, 507, 508, 509 selbst vornehmen zu lassen, besteht auch die Möglichkeit, das Feldgerät dauerhaft mit einem Steuergerät zu verbinden, und die gewünschten Informationen zyklisch mit dem Steuergerät abzufragen und als Dateien abzuspeichem. Zusätzlich kann man mit diesem Aufbau auch ein Abbild der kompletten Parametrierdaten als Datei erhalten.

Die thematisch jeweils unterschiedlichen Informationen werden typischerweise als individuelle Dateitypen mit unterschiedlicher Dateierweiterung abgespeichert. Die einzelnen Aufzeichnungsdateien können zur späteren Analyse in ein Steuergerät 501 eingelesen und teils grafisch visualisiert werden.

Das Steuergerät 501 kann sowohl mit Feldgeräten direkt verbunden werden, um die Messwerte und/oder Ereignisse auszulesen und in eine Datenbank zu übernehmen als auch die Daten von verschiedenen computerlesbaren Medien 503 wie beispielsweise CDs oder DVDs als Dateien übernehmen.

Nach Konfiguration einer sogenannten Messwertansicht können dann die Messwertkurven und Ereignisse visualisiert werden.

Auf dem Steuergerät 501 ist beispielsweise eine Kontrollsoftware mit einer Bedienoberfläche installiert. Bestehende Feldgerätedaten können übernommen und bestehenden Datensätzen zugeordnet werden, oder es werden neue Datensätze angelegt, denen die Feldgerätedaten zugeordnet werden. Die Kontrollsoftware bildet für jedes Feldgerät 506, 507, 508, 509, welches beispielsweise durch die Seriennummer identifiziert wird, einen separaten Datensatz. Zusätzlich besteht die Möglichkeit, Messwertaufzeichnungen und Echokurvenaufzeichnungen direkt mit der Kontrollsoftware aus den Geräteschnittstellen der Feldgeräte 506, 507, 508, 509 auszulesen.

Insbesondere können in der Kontrollsoftware die eingelesenen Feldgerätedaten automatisch zu bestehenden Datensätzen zugeordnet und in das Kalenderwerkzeug eingegliedert werden. Aus dem Kalenderwerkzeug heraus können über die oben genannten Symbole (z. B. Balken) auch die neu eingelesenen Daten unmittelbar visualisiert werden. Es bedarf dazu keiner Konfiguration.

Ferner können verschiedene Feldgeräte 506, 507, 508, 509 mit Internetzugang ihre Daten per Email an ein zuvor definiertes Emailkonto schicken. Die Kontrollsoftware verfügt über Funktionen zum Auslesen dieses E-Mailkontos und zum Übernehmen der darin enthaltenen Messwertaufzeichnungen. Als Möglichkeit zum Austausch bestimmter Feldgerätedaten zwischen zwei Steuergeräten 501 mit je einer Kontrollsoftware stehen dem Anwender entsprechende Funktionen zum Exportieren sowie Importieren der Feldgerätedaten zur Verfügung.

Für den späteren Zugriff auf die Daten bietet die Kontrollsoftware eine Feldgeräteliste an, die einen eindeutigen Zugriff auf Feldgerätedaten über eine Seriennummer sichert. Die Kontrollsoftware bietet für die Feldgeräteliste eine Such- und Filterfunktion. Die Filterfunktion durchsucht unter anderem nach Seriennummer, Feldgeräte-TAG und Feldgerätetyp. Über spezielle Eingabemasken kann der Benutzer den Feldgeräten 506, 507, 508, 509 eine Vielzahl zusätzlicher Merkmalstexte zuweisen, die ebenfalls für die Suche und/oder für die gefilterte Darstellung der Feldgeräteliste berücksichtigt werden.

Sowie der Benutzer ein Feldgerät 506, 507, 508, 509 aus der Feldgeräteliste ausgewählt hat (beispielsweise durch einen einfachen Mausklick auf einen Eintrag in der Feldgeräteliste) liefert ein Fenster (im Folgenden Gerätedatenbereich genannt) alle für das gewählte Feldgerät 506, 507, 508, 509 verfügbaren Daten. Der Gerätedatenbereich ist in Registerkarten angeordnet mit mindestens einer Registerkarte "Information" und einer Registerkare "Verfügbare Daten". Die Registerkarte "Information" enthält die wesentlichen Identifikationsdaten und frei wählbare Merkmalstexte und/oder Bilder zum gewählten Feldgerät 506, 507, 508, 509. Die Registerkarte "Verfügbare Daten" zeigt einen Überblick des kompletten Datenbestands zum gewählten Feldgerät 506, 507, 508, 509 in Form eines Kalenderwerkzeugs oder eines Übersichtskalenders.

Eine weitere Funktion der Kontrollsoftware liegt in der Volltextsuche. Wie bereits erwähnt, unterstützt das System das Zuordnen von beliebigen Dokumenten als Anhänge. Mit Hilfe der Funktion Volltextsuche steht ein Verfahren zur Verfügung, das den Inhalt von textbasierten Dokumenten (zum Beispiel Word-Dokumente oder PDF-Dokumente) nach dem Suchbegriff durchsucht und die gefundenen Treffer in einer Auswahlliste darstellt. Jeder Eintrag in dieser Liste ist mit einem Link hinterlegt und der Anwender kann so mit einem Mausklick auf das zugehörige Feldgerät mit dem Dokument wechseln.

In Fig. 6 ist ein Flussdiagramm eines Verfahrens zur Kontrolle und Steuerung von Feldgeräten im Bereich der industriellen Messwerterfassung abgebildet. In einem ersten Schritt 601 werden Feldgerätedaten eingelesen, welche mehrere Untergruppen von Feldgerätedaten aufweisen. In einem zweiten Schritt 602 werden Zeitpunkte festgestellt, an denen die jeweiligen Untergruppen der eingelesenen Feldgerätedaten erzeugt wurden. In einem dritten Schritt 603 wird jede der Untergruppen der eingelesenen Feldgerätedaten zu einem entsprechenden Feldgerät zugeordnet. In einem vierten Schritt 604 wird eine erste Gruppe der Untergruppen der eingelesenen Feldgerätedaten zu einem ersten Datentyp zugeordnet und in einem fünften Schritt 605 wird eine zweite Gruppe der Untergruppen der eingelesenen Feldgerätedaten zu einem zweiten Datentyp zugeordnet. Letztlich werden in einem sechsten Schritt 606 die Untergruppen der eingelesenen Feldgerätedaten in einem Diagramm in Abhängigkeit der Zeitpunkte, an denen sie erzeugt wurden, und in Abhängigkeit ihres Datentyps grafisch dargestellt.

Ergänzend sei daraufhinzuweisen, dass umfassend oder aufweisend keine anderen Elemente oder Schritte ausschließt und ein "ein" oder ein "einer" keine Vielzahl ausschließt. Ferner sei daraufhingewiesen, dass Merkmale, die mit Verweis auf eines der obigen Ausführungsbeispiele beschrieben worden sind, auch in Kombination mit anderen Merkmalen anderer oben beschriebener Ausführungsbeispiele verwendet werden können. Bezugszeichen in den Ansprüchen sind nicht als Einschränkung anzusehen.

## Patentansprüche

1. Verfahren zur Kontrolle von Feldgeräten im Bereich der industriellen Messwerterfassung, die Schritte aufweisend:
Einlesen von Feldgerätedaten, welche mehrere Untergruppen von Feldgerätedaten aufweisen;
Feststellen von Zeitpunkten (104), an denen die jeweiligen Untergruppen der eingelesenen Feldgerätedaten erzeugt wurden;
Zuordnen jeder der Untergruppen der eingelesenen Feldgerätedaten zu einem entsprechenden Feldgerät (406 - 409);
Zuordnen einer ersten Gruppe der Untergruppen der eingelesenen Feldgerätedaten zu einem ersten Datentyp (105, 106, 107, 108, 109, 110);
Zuordnen einer zweiten Gruppe der Untergruppen der eingelesenen Feldgerätedaten zu einem zweiten Datentyp (105, 106, 107, 108, 109, 110);
grafisches Darstellen der Untergruppen der eingelesenen Feldgerätedaten in einem Diagramm (101) in Abhängigkeit der Zeitpunkte (104), an denen sie erzeugt wurden, und in Abhängigkeit ihres Datentyps (105 - 106);
wobei das Diagramm (101) ein Koordinatensystem mit einer ersten Achse (102) und einer zweiten Achse (103) aufweist;
wobei die Untergruppen der eingelesenen Feldgerätedaten in dem Diagramm mit Symbolen (111, 112, 113) dargestellt werden;
wobei ein jeweiliges Symbol an einer ersten Koordinate entlang der ersten Achse (102) und an einer zweiten Koordinate entlang der zweiten Achse (103) positioniert wird;
wobei die erste Koordinate den Zeitpunkten (104) entspricht, an denen die jeweilige Untergruppe der eingelesenen Feldgerätedaten erzeugt wurde;
**dadurch gekennzeichnet, dass** die zweite Koordinate dem Datentyp (105, 106, 107, 108, 109, 110) entspricht, welchem die Untergruppe der eingelesenen Feldgerätedaten zugeordnet wurde;
wobei über einen Zeitraum ermittelte Untergruppen der eingelesenen Feldgerätedaten mit Balken (114, 115) dargestellt werden;
wobei sich ein jeweiliger Balken (114) entlang der ersten Achse (102) von einer dritten Koordinate bis zu einer vierten Koordinate erstreckt;
wobei der Balken an einer fünften Koordinate entlang der zweiten Achse (103) positioniert ist;
wobei die dritte Koordinate dem Beginn der Erzeugung der Untergruppe der eingelesenen Feldgerätedaten entspricht;
wobei die vierte Koordinate dem Ende der Erzeugung der Untergruppe der eingelesenen Feldgerätedaten entspricht; und
wobei die fünfte Koordinate dem Datentyp (105, 106, 107, 108, 109, 110) der Untergruppe der eingelesenen Feldgerätedaten entspricht.

2. Verfahren gemäß Anspruch 1, weiter aufweisend die Schritte:
Auswahl einer Untergruppe der eingelesenen Feldgerätedaten in der grafischen Darstellung; und
grafisches Darstellen der Feldgerätedaten der ausgewählten Untergruppe der eingelesenen Feldgerätedaten.

3. Verfahren gemäß dem Anspruch 1 oder 2,
wobei ein Messwert durch ein Symbol (303) im Koordinatensystem (101) dargestellt wird;
wobei das Symbol an einer sechsten Koordinate entlang der ersten Achse (102) und an einer siebten Koordinate entlang der zweiten Achse positioniert ist;
wobei die sechste Koordinate einem Zeitpunkt der Messwerterfassung und die siebte Koordinate dem Messwert entspricht.

4. Verfahren gemäß einem der vorangehenden Ansprüche, wobei jeweils die erste Gruppe von Untergruppen der eingelesenen Feldgerätedaten und die zweite Gruppe von Untergruppen der eingelesenen Feldgerätedaten einem Datentyp aus der Gruppe bestehend aus Echokurven (110), DTM-Messwerte (109), Messwerte (108), vom Feldgerät detektierte Ereignisse (107), DTM-Dateien (106) und Dokumenten (105) zugeordnet ist.

5. Verfahren gemäß einem der vorangehenden Ansprüche, wobei ein erstes Diagramm (201) mit Untergruppen der eingelesenen Feldgerätedaten eines ersten Feldgeräts (506) und ein zweites Diagramm (202) mit Untergruppen der eingelesenen Feldgerätedaten eines zweiten Feldgeräts (507) gleichzeitig dargestellt werden.

6. Verfahren gemäß einem der vorangehenden Ansprüche, wobei die Feldgerätedaten in Form von Dateien eingelesen werden und zu jeder Datei ein Datensatz in einer Datenbank angelegt wird.

7. Verfahren gemäß Anspruch 6, wobei zum Darstellen der Feldgerätedaten, die zugehörige Datei ausgelesen wird und in der Datei gespeicherte Daten dargestellt werden.

8. Verfahren gemäß einem der vorangehenden Ansprüche, wobei die Feldgerätedaten über ein Element aus der Gruppe bestehend aus Geräteschnittstelle und Emailkonto eingelesen werden.

9. Steuergerät (501) zur Kontrolle und Steuerung von Feldgeräten im Bereich der industriellen Messwerterfassung, das ausgeführt ist, ein Verfahren nach einem der Ansprüche 1 bis 8 durchzuführen.

10. Programmelement zur Kontrolle von Feldgeräten im Bereich der industriellen Messwerterfassung, das, wenn es auf einem Prozessor eines Steuergeräts (501) ausgeführt wird, das Steuergerät anleitet, ein Verfahren nach einem der Ansprüche 1 bis 8 durchzuführen.

11. Computerlesbares Medium (503), auf dem ein Programmelement zur Kontrolle von Feldgeräten im Bereich der industriellen Messwerterfassung gespeichert ist, das, wenn es auf einem Prozessor eines Steuergeräts (501) ausgeführt wird, das Steuergerät anleitet, ein Verfahren nach einem der Ansprüche 1 bis 8 durchzuführen.

## Claims

1. Method for monitoring field devices in the field of industrial data acquisition, comprising the steps of:
reading in field device data comprising a plurality of subgroups of field device data;
determining points in time (104) at which the respective subgroups of the read-in field device data were generated;
assigning each of the subgroups of the read-in field device data to a respective field device (406 - 409);
assigning a first group of the subgroups of the read-in field device data to a first data type (105, 106, 107, 108, 109, 110);
assigning a second group of the subgroups of the read-in field device data to a second data type (105, 106, 107, 108, 109, 110);
displaying graphically the subgroups of the read-in field device data in a graph (101) as a function of the points in time (104) at which they were generated and as a function of their data type (105 - 106);
the graph (101) comprising a coordinate system having a first axis (102) and a second axis (103);
the subgroups of the read-in field device data being represented in the graph by symbols (111, 112, 113);
a particular symbol being positioned at a first coordinate on the first axis (102) and at a second coordinate on the second axis (103);
the first coordinate corresponding to the points in time (104) at which the relevant subgroup of the read-in field device data was generated;
**characterised in that** the second coordinate corresponds to the data type (105, 106, 107, 108, 109, 110) to which the subgroup of the read-in field device data was assigned;
subgroups of the read-in field device data that are determined over a period of time being represented by bars (114, 115);
a particular bar (114) extending along the first axis (102) from a third coordinate to a fourth coordinate;
the bar being positioned on the second axis (103) at a fifth coordinate;
the third coordinate corresponding to the start of the generation of the subgroup of the read-in field device data;
the fourth coordinate corresponding to the end of the generation of the subgroup of the read-in field device data; and
the fifth coordinate corresponding to the data type (105, 106, 107, 108, 109, 110) of the subgroup of the read-in field device data.

2. Method according to claim 1, further comprising the steps of:
selecting a subgroup of the read-in field device data in the graphical display; and
displaying graphically the field device data of the selected subgroup of the read-in field device data.

3. Method according to either claim 1 or claim 2,
wherein a measured value is represented in the coordinate system (101) by a symbol (303);
wherein the symbol is positioned on the first axis (102) at a sixth coordinate and on the second axis at a seventh coordinate;
wherein the sixth coordinate corresponds to a point in time at which the measurement was made, and the seventh coordinate corresponds to the measured value.

4. Method according to any of the preceding claims, wherein the first group of the subgroups of the read-in field device data and the second group of the subgroups of the read-in field device data are each assigned to a data type from the group consisting of echo curves (110), DTM measured values (109), measured values (108), events (107) detected by the field device, DTM files (106) and documents (105).

5. Method according to any of the preceding claims, wherein a first graph (201) containing subgroups of the read-in field device data from a first field device (506), and a second graph (202) containing subgroups of the read-in field device data from a second field device (507) are displayed at the same time.

6. Method according to any of the preceding claims, wherein the field device data are read-in in the form of files, and a data record is created for each file in a database.

7. Method according to claim 6, wherein, for the purpose of displaying the field device data, the associated file is read out and the data stored in the file are displayed.

8. Method according to any of the preceding claims, wherein the field device data are read-in via an element from the group consisting of the device interface and email account.

9. Control device (501) for monitoring and controlling field devices in the field of industrial data acquisition, which control device is designed to carry out a method according to any of claims 1 to 8.

10. Program element for monitoring field devices in the field of industrial data acquisition, which program element, when executed in a processor of a control device (501), prompts the control device to carry out a method according to any of claims 1 to 8.

11. Computer-readable medium (503) on which a program element is stored for monitoring field devices in the field of industrial data acquisition, which medium, when executed in a processor of a control device (501), prompts the control device to carry out a method according to any of claims 1 to 8.

## Revendications

1. Procédé de contrôle d'appareils de champ dans le secteur de la saisie industrielle de valeurs de mesure, comprenant les étapes suivantes :
mise en mémoire de données d'appareils de champ, qui présentent plusieurs sous-groupes de données d'appareils de champ ;
fixation d'instants (104), auxquels les sous-groupes respectifs des données d'appareils de champ enregistrées ont été générés ;
affectation de chacun des sous-groupes de données d'appareils de champ enregistrées à un appareil de champ (406 - 409) correspondant ;
affectation d'un premier groupe des sous-groupes des données d'appareils de champ enregistrées à un premier type de données (105, 106, 107, 108, 109, 110) ;
affectation d'un second groupe des sous-groupes de données d'appareils de champ enregistrées à un second type de données (105, 106, 107, 108, 109, 110) ;
représentation graphique des sous-groupes de données d'appareils de champ enregistrées dans un diagramme (101) en fonction des instants (104), auxquels ils ont été générés, et en fonction de leur type de données (105 - 106) ;
le diagramme (101) présentant un système de coordonnées avec un premier axe (102) et un second axe (103) ;
les sous-groupes de données d'appareils de champ enregistrées étant représentés dans le diagramme par des symboles (111, 112, 113) ;
un symbole respectif étant positionné en une première coordonnée le long du premier axe (102) et en une deuxième coordonnée le long du second axe (103) ;
la première coordonnée correspondant aux instants (104), auxquels le sous-groupe respectif des données d'appareils de champ enregistrées a été généré ;
**caractérisé en ce que**
la deuxième coordonnée correspond au type de données (105, 106, 107, 108, 109, 110), auquel le sous-groupe des données d'appareils de champ enregistrées a été affecté ;
des sous-groupes des données d'appareils de champ enregistrées, déterminés sur une période, étant représentés par des barres (114, 115) ;
une barre respective (114) s'étendant le long du premier axe (102) d'une troisième coordonnée à une quatrième coordonnée ;
la barre étant positionnée en une cinquième coordonnée le long du second axe (103) ;
la troisième coordonnée correspondant au début de la génération du sous-groupe de données d'appareils de champ enregistrées ;
la quatrième coordonnée correspondant à la fin de la génération du sous-groupe de données d'appareils de champ enregistrées ; et
la cinquième coordonnée correspondant au type de données (105, 106, 107, 108, 109, 110) du sous-groupe de données d'appareils de champ enregistrées.

2. Procédé selon la revendication 1, comprenant en outre les étapes suivantes :
sélection d'un sous-groupe de données d'appareils de champ enregistrées dans la représentation graphique ; et
représentation graphique des données d'appareils de champ du sous-groupe sélectionné de données enregistrées.

3. Procédé selon l'une des revendications 1 et 2,
une valeur de mesure étant représentée par un symbole (303) dans le système de coordonnées (101) ;
le symbole étant positionné en une sixième coordonnée le long du premier axe (102) et en une septième coordonnée le long du second axe ;
la sixième coordonnée correspondant à un instant de la saisie de valeurs de mesure et la septième coordonnée correspondant à la valeur de mesure.

4. Procédé selon l'une des revendications précédentes, le premier groupe de sous-groupes de données d'appareils de champ enregistrées et le second groupe de sous-groupes de données d'appareils de champ enregistrées étant affectés respectivement à un type de données du groupe constitué de courbes d'échos (110), de valeurs de mesures DTM (109), de valeurs de mesure (108), d'évènements (107) détectés par l'appareil de champ, de fichiers DTM (106) et de documents (105).

5. Procédé selon l'une des revendications précédentes, un premier diagramme (201) avec des sous-groupes de données d'appareils de champ enregistrées d'un premier appareil de champ (506) et un second diagramme (202) avec des sous-groupes de données d'appareils de champ enregistrées d'un deuxième appareil de champ (507) étant représentés simultanément.

6. Procédé selon l'une des revendications précédentes, les données d'appareils de champ étant enregistrées en forme de fichiers et un enregistrement étant créé dans une banque de données pour chaque fichier.

7. Procédé selon la revendication 6, le fichier correspondant étant lu et des données mémorisées dans le fichier étant représentées pour la représentation des données d'appareils de champ.

8. Procédé selon l'une des revendications précédentes, les données d'appareils de champ étant mises en mémoire par l'intermédiaire d'un élément du groupe constitué de l'interface d'appareil et du compte E-mail.

9. Appareil de commande (501) pour le contrôle et la commande d'appareils de champ dans le secteur de la saisie industrielle de valeurs de mesure, réalisé pour mettre en oeuvre un procédé selon l'une des revendications 1 à 8.

10. Elément de programme pour le contrôle d'appareils de champ dans le secteur de la saisie industrielle de valeurs de mesure, lequel élément, lorsqu'il est exécuté sur un processeur d'un appareil de commande (501), donne l'ordre à l'appareil de commande de mettre en oeuvre un procédé selon l'une des revendications 1 à 8.

11. Support lisible par ordinateur (503), sur lequel est mémorisé un élément de programme pour le contrôle d'appareils de champ dans le secteur de la saisie industrielle de valeurs de mesure, lequel élément, lorsqu'il est exécuté sur un processeur d'un appareil de commande (501), donne l'ordre à l'appareil de commande de mettre en oeuvre un procédé selon l'une des revendications 1 à 8.
